(19) **Europäisches Patentamt**

**European Patent Office**

**Office européen des brevets**

(11) **EP 1 137 921 B1**

(12) **EUROPEAN PATENT SPECIFICATION**

(45) Date of publication and mention
of the grant of the patent:
**19.02.2003   Bulletin 2003/08**

(21) Application number: **99954204.6**

(22) Date of filing: **10.11.1999**

(51) Int Cl.7: **G01M 3/28**

(86) International application number:
**PCT/GB99/03742**

(87) International publication number:
**WO 00/028296 (18.05.2000 Gazette 2000/20)**

(54) **Leak location with mobile sensor in a pipe**

Ortsbestimmung eines Lecks mit mobilem Sensor in einem Rohr

Localisation de fuites avec un capteur mobile dans un tube

(84) Designated Contracting States:
**AT BE CH CY DE DK ES FI FR GB GR IE IT LI LU MC NL PT SE**

(30) Priority: **10.11.1998   GB 9824677**

(43) Date of publication of application:
**04.10.2001   Bulletin 2001/40**

(73) Proprietor: **ABERDEEN UNIVERSITY**
**Aberdeen AB2 1RY (GB)**

(72) Inventor: **MCEWAN, Ian, Kenneth**
**Aberdeen AB24 4JF (GB)**

(74) Representative: **Ablett, Graham Keith et al**
**Ablett & Stebbing,**
**Caparo House,**
**101-103 Baker Street**
**London W1M 1FD (GB)**

(56) References cited:
**US-A- 4 016 748          US-A- 5 272 646**
**US-A- 5 526 678**

## Description

The present invention relates to a method and system for locating fluid leaks from pipes. Whilst the invention is concerned in particular with locating leaks in water pipes, the present invention extends to fluids generally passing through pipe work of differing materials.

Recent drought years in the United Kingdom have highlighted the need to treat the commodity of water with much greater care, this being both environmentally and commercially important. Thus, there is a need to reduce the loss of water through leaks in the water distribution pipes.

One method to reduce leakage involves modelling flow patterns according to detected water pressures in the pipes and then adjusting actual flow to minimise the effects of leakage. However, this method is relatively crude and unsophisticated in that precise location of the leak is not determined and only leakage rates for whele sections of pipework are resolved. Thus, the problem caused by the leak can only be minimised rather than cured.

Another method to reduce leakage involves taking acoustic samples from sensors located at two separated points on the pipe. However, this method requires an approximate idea of the location of a leak along with access to the pipe itself, which may be underground.

In both the above methods, no readily useful information is provided about the detail of the leak, e.g. size, geometry or radial position.

An object of the present invention is therefore to provide a method and system for locating leaks in a pipe containing fluid flowing therethrough.

According to an aspect of the present invention there is provided a method for locating leaks in a pipe containing fluid flowing therethrough, the method comprising:-

    providing a sensor means within the pipe for detecting characteristics of the fluid;
    recording the detected characteristics of the fluid;
    evaluating a fluid flow field characteristic of the fluid flowing through the pipe and comparing the evaluated fluid flow field characteristic with a reference fluid flow field characteristic for that pipe to obtain thereby data concerning a leak.

Preferably, the reference fluid field characteristic is obtained immediately after installation of the pipe.

However, in cases where this is not practical or where the condition of the pipe will change with time, the reference fluid characteristics will be derived from the upstream characteristics of the flow before the point where a leak has altered the flow characteristics within the pipe.

In one embodiment, the evaluated fluid flow field characteristic is compared with earlier fluid flow field characteristics from the pipe to provide an indication of changes in the pipe over time.

It is preferred that the step of comparing the evaluated fluid flow field characteristic with the reference fluid flow field characteristic is effected by a neural network.

Conveniently, the sensor means is selected from pressure sensors, sound sensors, vibrational sensors, fluid speed sensors, fluid density sensors.

In one case, the sensor means are located around an axis parallel to the pipe and/or along that axis.

According to another aspect of the present invention there is provided a leak location system for locating leaks in a pipe containing fluid flowing therethrough, the system comprising:-

    a sensor means for detecting characteristics of the fluid;
    means for recording the detected characteristics of the fluid;
    means for evaluating a fluid flow field characteristic of the fluid flowing through the pipe and comparing the evaluated fluid flow field characteristic with a reference fluid flow field characteristic for that pipe to obtain thereby data concerning a leak.

Conveniently, the sensor means is selected from pressure sensors, sound sensors, vibrational sensors, fluid speed sensors, fluid density sensors.

Preferably, the sensor means are located around an axis parallel to the pipe and/or along that axis.

In a preferred embodiment, the sensors are differential pressure sensors to detect the differential pressure at radially distributed locations spaced around an axis parallel to the pipe and/or along that axis.

An example of the present invention will now be described with reference to the accompanying drawings, in which:-

    Figure 1 shows schematically apparatus for use in the method of the present invention;
    Figure 2 shows a relationship between the apparatus of Figure 1 when provided in a pipe with a leak and a measurement of flow field;
    Figure 3 illustrates an array of differential sensors for use in the apparatus shown in Figure 1;
    Figure 4 illustrates one example of detected pressure characteristics of a leak using the sensor array of Figure 3;
    Figure 5 illustrates another example of detected pressure characteristics of a leak using the sensor array of Figure 3;
    Figure 6 illustrates the detected pressure characteristics of figure 5 in enlarged form adjacent the leak; and
    Figure 7 illustrates an example of detected pressure characteristics without a leak using the sensor array of Figure 3.

As mentioned above, the present invention can be applied to fluids generally, for example, oil, water, natural gas etc. The present embodiment will be described with respect to water.

As a fluid passes through pipework, it can be represented as a flow field varying according to the spatial location within the pipe. The characteristics of the fluid flow field will vary according to a large number of parameters, including for example pipe size (diameter), fluid pressure, pipe surface characteristics, the type of flow, side passages, directional variation of the pipe etc. Another parameter that will modify the fluid flow field characteristics is the presence of a leak. Indeed, the degree of modification of the fluid flow field characteristics will vary according to the form of leak, for example its size, type, geometry and location within the pipe.

However, it has been found that one of the particular problems in detecting a leak is that the effects of the leak on the fluid flow field are very difficult to detect. There are a number of reasons for this. One reason is that the overall flow of the water in the pipe is not laminar. Instead, there is a continual background turbulence within the overall flow. This tends to mask the modifications to the fluid flow field resulting from the leak. Another reason is that the modifications to the fluid flow field resulting from the leak are extremely small and highly localised. For example, the localised drop in pressure relative to the gross or ambient pressure in the pipe that results from a leak of diameter a is of the order of ¼% with the effect of the leak disappearing within a pipe length of 5a to 10a before and after the leak. This makes it extremely difficult to detect a leak at all and makes it extremely difficult to pin point the location of a leak.

The inventor considers that a part of the reason for the very small localised effect of a leak is that the flow within the pipe recovers very quickly after the leak. In fact, the disturbance in the flow field characteristic probably derives from a velocity component of the leaking water as it flows through the leak, this velocity component being essentially normal to the direction of the gross flow of water in the pipe. The effect of this component will be small within the terms of the gross water flow and will disappear rapidly either side of the leak.

By varying the aforementioned parameters with assorted forms of leaks whilst monitoring the characteristics of the fluid flow field, and by using various processing techniques, it is possible to correlate leak form with fluid flow field characteristics thereby enabling the location of leaks and determination of leak form.

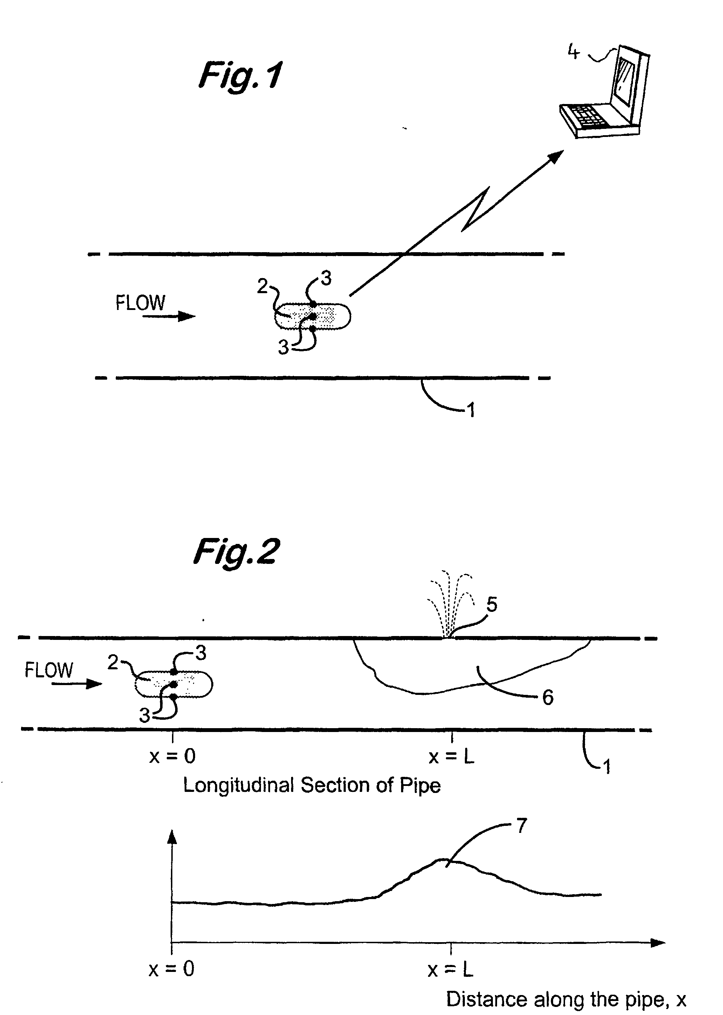

Referring to Figure 1, a leak location system comprises a sensor means, in the form of a capsule 2, which is located in a pipe section 1 through which water is flowing in the direction of the arrow. The pipe section has preset parameters. The capsule has dispersed around its periphery a plurality of sensors 3 for measuring a fluid flow field characteristic within the pipe interior. Measurements taken by the sensors 3 are communicated to a remote computer 4. In this respect, the measurements may be communicated in real time, for example by way of a transmitter on the capsule and a suitable receiver for the computer. Alternatively, the measurements may be stored in a memory on the capsule, for example on a smart card, the data from which can be transferred to the computer following a passage of the capsule within the section of pipe.

The capsule 2 is arranged to traverse along the interior of the pipe in the flow of water. In this respect, the capsule may rely on the flow of water to carry it through a designated section of pipe, or it may be provided with propulsion means for affording it independent movement within the flow. The capsule is provided with location means whereby the location of the capsule within the pipe section can be determined. The location means may comprise, for example, ultrasonic sensors for accurately measuring distances to pipe walls and/or GSM technology for accurately determining the position of the sensor within e.g. a long stretch of pipe.

A movement control means can also be provided for adjusting the spatial position of the capsule. Such movement control means may include radio controlled vanes or fins or the like for guiding the capsule within the flow.

The data from the measurements of the sensors are processed by a processing means and stored in memory. A series of data are obtained from pipe sections having different parameters and with and without leaks of varying forms whereby a library of fluid flow field characteristics is built up which can be differentiated according to these parameters. By using artificial neural networks and repeating the taking of data a large number of times, the artificial neural network learns to classify the fluid flow field characteristics with more and more accuracy.

The use of the above described system is now described in relation to figure 2.

In order to examine a section of pipe, a suitable inlet in the pipe is required for insertion of the capsule into the flow. Once inserted, the capsule 2 traverses along the pipe taking separate pressure measurements from the individual pressure sensors 3. Such measurements are recorded within the capsule. The fluid flow field characteristics as represented by the pressure measurements are modified by the presence of a leak 5 as shown by the pressure contour 6. Hence, the pressure measurements taken by the sensors on the capsule provide information about the presence of the leak according to the graphical plot of pressure in relation to distance along the pipe section, as shown in the figure. A leak 5 is positioned at the point x=L along the length of the pipe, the plot showing this to be an area of pressure fluctuation. The plot is only illustrative and will vary depending on the geometry of the leak.

When analysing the measurements, details of the pipe geometry can be entered in the computer 4. In this manner, the relevance of a modification of the fluid flow field characteristic can be more accurately considered.

Thus, the measurements taken by the capsule are not necessarily particularly helpful on their own in establishing conditions within the pipe, e.g. the position and geometry of the leak. In order to interpret the measurements in detail, they are compared with similar measurements from other pipe sections having known internal conditions. Such known measurements may be held by the computer in a library of prior measurement and associated pipe internal condition data. In this regard, the measurements can be used to form a fluid flow field signature of the pipe under examination as shown generally by the plot in Figure 2. When suitably categorised or classified, such a signature can be readily compared with signatures formed for prior known pipe internal configurations to draw out relevant characteristics.

As such, the measurements themselves do not need to be fully understood, merely compared with previous measurement data having known associated pipe characteristics.

In carrying out the analysis of the measurements, neural networks may be employed. Pre-processing of the measurements can be conducted using several techniques such as principal component analysis, wavelet transforms, and higher order spectral analysis. With use of pre-processing of the signal, it is possible to extract the maximum amount of detail about pertinent aspects of the signatures whilst minimising unwanted information and noise.

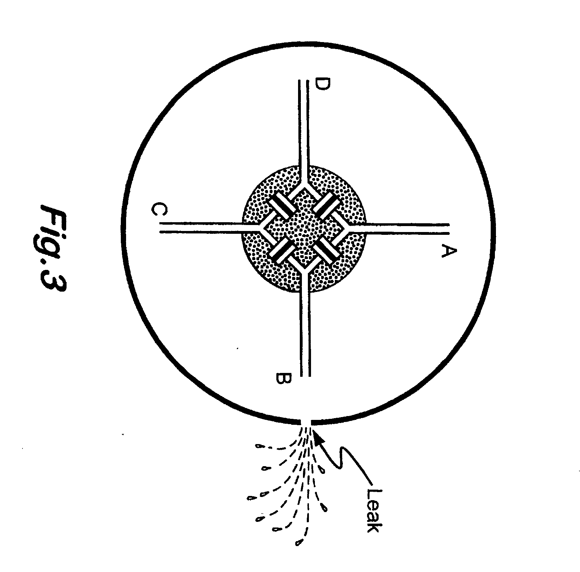

Figure 3 illustrates an array of sensors which provides a more sensitive form of sensor means that can be applied to the capsule 2 shown in figure 1. In particular, four differential pressure sensors (e.g. Honeywell 24 PCA) are provided in the capsule to detect the differential pressure between four sensor outlets or tapping points A to D distributed radially around the body of the capsule. Thus, the differential pressure between outlets A-B, B-C, C-D and D-A can be detected. Since absolute pressures are not detected, the sensors can resolve small localised pressure differentials enabling the detection of the small pressure drops resulting from leaks. Furthermore, due to the angular arrangement of the outlets, spatial location of the leak is provided.

With regard to the term pressure differential, it will be appreciated that the pressure will depend on the depth of the outlet in the water. For example, each 10 mm of depth represents 100 Pa. Thus, the sensors can easily detect a differential pressure between the outlets in the presence of a leak.

The pressure field in the vicinity of the leak can be described by the equation:-

$$\Delta P = \tfrac{1}{4}\left(\tfrac{a}{r}\right)^4 [p_0 - p_a]$$

where

$\Delta P$ is the magnitude of the pressure variation due to the leak

a is the length scale at the leak (e.g. the radius for a circular hole)

r is the distance from the leak

$p_o$ is the ambient pressure in the pipe

$p_a$ is the pressure outside the pipe (this could be close to atmospheric

Thus, for instance, if $p_o$ = 10 bar = $10^6$ Pa, $p_a$ = 1 bar = $10^5$ Pa, a = 0.01 m, r = 0.05 m, then $\Delta P$ = 360 Pa.

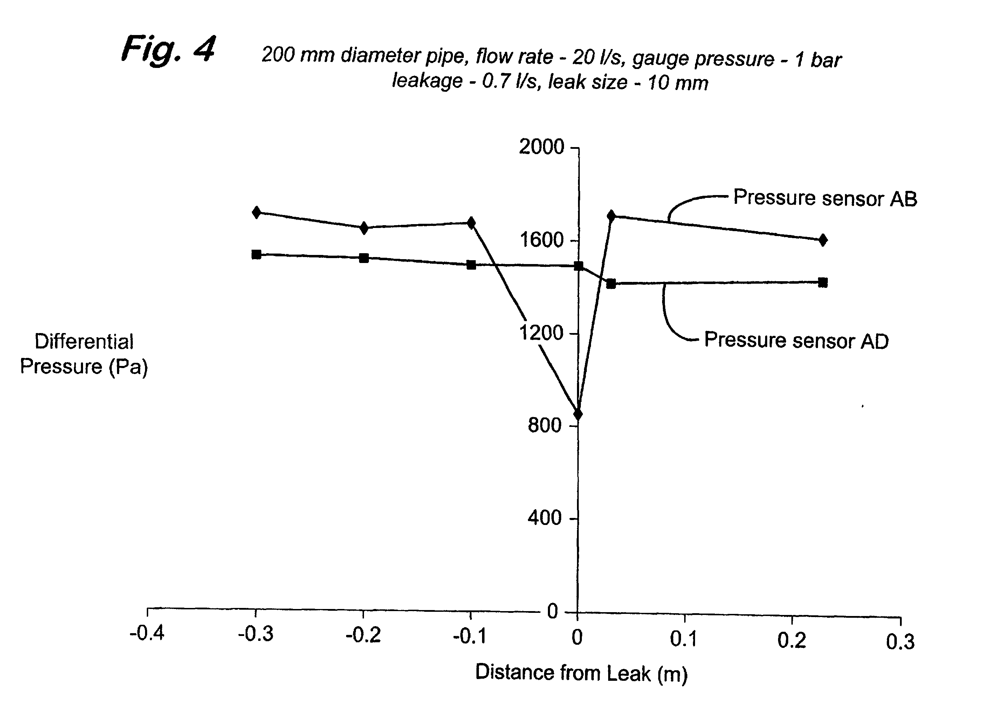

Figure 4 illustrates an example of detected fluid flow characteristics in the form of pressure. In particular, this figure shows results from a pipe of 0.2 m diameter with a water flow rate therethrough of 20 l/s at a pressure of 1 bar ($10^5$ Pa). A hole of diameter 0.01 m has been made in the pipe at a specific location providing a leakage of 0.7 l/s. The capsule 2 is moved incrementally along the pipe to take readings. In this figure, the increments are 0.1 m. The capsule is moved incrementally in this case so that localised turbulence caused by the capsule subsides to provide more stable readings. However, the size of the increment can be reduced and by application of suitable pre-processing techniques as mentioned above, the instability of the readings resulting from localised turbulence can be filtered out to provide a cleaner overall characteristic or signature.

It can be seen from Figure 4 that a comparison of the detected characteristics for the differential detector for outlets A-B and the differential detector for outlets D-A shows a marked effect around the location of the leak. Indeed, from a point some 0.1 m upstream of the leak, the differential pressure decreases to a minimum at the leak and after the leak is passed the differential pressure recovers within about 0.03 m. The drop in differential pressure is almost 50% at the minimum.

The difference in differential pressure between the lines for sensors A-B and A-D in figure 4 could either be an intrinsic instrument offset or a relative tilt of the sensors.

It has been found that the magnitude of the leak is related to the pressure drop measured by the differential pressure sensors. Moreover, it will be noted that since the outlets D-A are remote from the position of the leak, no differential pressure drop is detected. This further illustrates the localised nature of the disturbance in the fluid field characteristic. Whilst the detected magnitude of the pressure drop is related to the magnitude of the leak, it is apparent that the further from the leak, the smaller the magnitude of the pressure drop. Nevertheless, by using the differential pressure from openings B-C (not shown in figure 4 for convenience), it is possible to still resolve out a pressure drop that is representative of the magnitude of the leak.

Whilst the results of Figure 4 show a simple pressure drop for tapping points A-B that is compared with the reference pressure drop for tapping points D-A, it will be appreciated that by using the analytical techniques mentioned above, greater accuracy in leak detection and information about the leak in relation to specific pipework can be obtained.

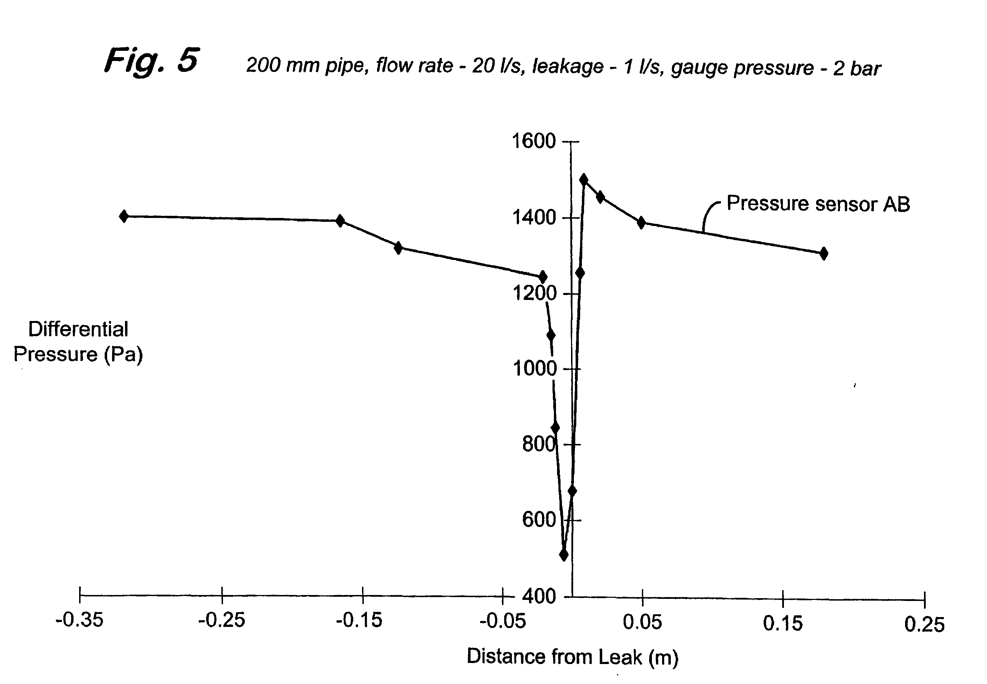

Figure 5 illustrates another example of detected fluid flow characteristics in the form of pressure. In particular, this figure shows results from a pipe of 0.2 m diameter with a water flow rate therethrough of 20 l/s at a pressure of 2 bar. A hole of diameter 0.01 m has been made in the pipe at a specific location providing a leakage of 1.0 l/s. The capsule 2 is moved incrementally along the pipe to take readings. In this figure, the increments are varied compared with those of figure 4.

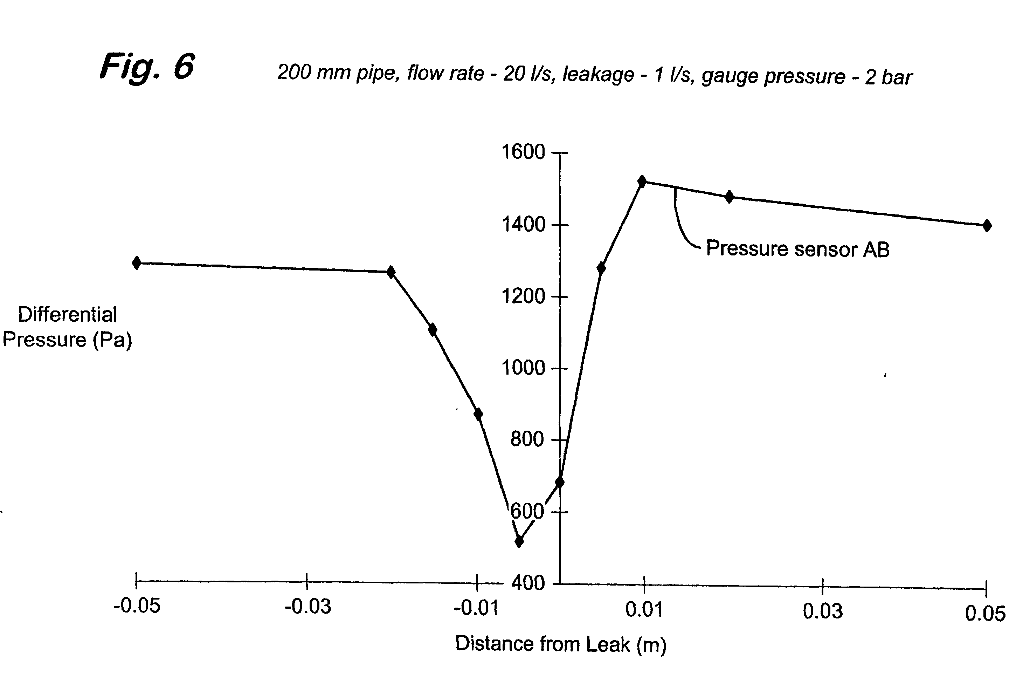

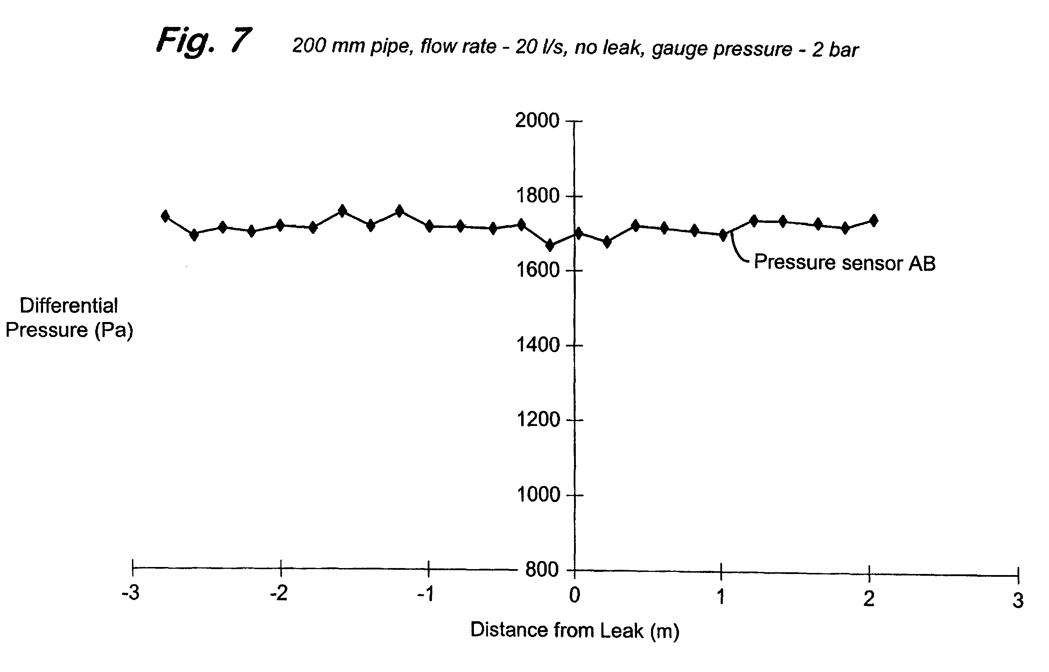

Figure 6 illustrates the characteristic shown in figure 5 in enlarged form for the portion around the leak, whilst Figure 7 illustrates the detected fluid flow characteristic for the same parameters as in figure 5 except that there is no leak. It can be seen from figures 5, 6 and 7 that a comparison of the detected characteristics for the differential pressure for outlets A-B and the non-leak detected characteristics for the differential pressure for outlets A-B shows a marked effect around the location of the leak. Indeed, from a point some 0.02 m upstream of the leak, the differential pressure decreases to a minimum at the leak and after the leak is passed the differential pressure recovers within about 0.015 m. The drop in differential pressure is greater than 50% at the minimum.

It has been found that the magnitude of the leak is related to the pressure drop measured by the differential pressure sensors. Moreover, it will be noted that since the outlets D-A are remote from the position of the leak, no differential pressure drop is detected. This further illustrates the localised nature of the disturbance in the fluid field characteristic.

It will be appreciated that the example illustrated shows an application of the invention in one form only for the purpose of illustration. In practice, the invention may be applied to many different configurations, the detailed embodiments being straightforward for those skilled in the art to implement.

For example, whilst sensors 3 have been described as pressure sensors, other forms of sensor can be employed to provide fluid flow field characteristics. For example, sound sensors, vibrational sensors, fluid speed, fluid density and other sensors of the fluid behaviour and characteristics can be used either individually or in a combined form to build up fluid flow field characteristics.

## Claims

1. A method for locating leaks in a fluid-carrying pipe, the method comprising:-

    causing or permitting a sensor means (2), mobile within the pipe, to traverse at least a section (1) of the pipe for detecting, during said traverse, characteristics of the fluid in relation to position along said pipe;
    recording the detected characteristics of the fluid;
    evaluating a fluid flow field characteristic of the fluid flowing through the pipe and comparing the evaluated fluid flow field characteristic with a reference fluid flow field characteristic for that pipe to obtain thereby data concerning a leak.

2. A method according to claim 1 wherein the reference fluid flow field characteristic is obtained immediately after installation of the pipe.

3. A method according to claim 2 wherein the evaluated fluid flow field characteristic is compared with earlier fluid flow field characteristics from the pipe to provide an indication of changes in the pipe over time.

4. A method according to any preceding claim wherein the step of comparing the evaluated fluid flow field characteristic with the reference fluid flow field characteristic is effected by a neural network.

5. A method according to any preceding claim wherein the sensor means is selected from pressure sensors, sound sensors, vibrational sensors, fluid speed sensors, fluid density sensors, and distance sensors.

6. A method according to any preceding claim wherein the sensor means are located around an axis parallel to the pipe and/or along that axis.

7. A method according to any preceding claim wherein the fluid flow characteristic is based on pressure of the fluid flowing through the pipe.

8. A leak location system for locating leaks in a pipe containing fluid flowing therethrough, the system comprising:-

    a sensor means (2), mobile within the pipe;
    means causing or permitting said sensor means to traverse at least a section (1) of the pipe for detecting, during said traverse, characteristics of the fluid in relation to position along said pipe;
    means for recording the detected characteristics of the fluid;
    means (4) for evaluating a fluid flow field characteristic of the fluid flowing through the pipe and comparing the evaluated fluid flow field characteristic with a reference fluid flow field characteristic for that pipe to obtain thereby data concerning a leak.

9. A system according to claim 8 wherein the sensor means is selected from pressure sensors, sound sensors, vibrational sensors, fluid speed sensors, fluid density sensors; and distance sensors.

10. A system according to claim 8 or 9 wherein the sensor means are located around an axis parallel to the pipe and/or along that axis.

11. A system according to any one of claims 8 to 10 wherein the sensors are differential pressure sensors to detect the differential pressure at radially distributed locations spaced around an axis parallel to the pipe and/or along that axis.

**Revendications**

1. Procédé de localisation des fuites dans une canalisation de transport de fluide, le procédé comprenant les étapes consistant à :

   - amener un moyen détecteur (2) ou permettre à un moyen détecteur (2), mobile à l'intérieur de la canalisation, de traverser au moins une section (1) de la canalisation pour détecter, pendant ladite traversée, des caractéristiques du fluide en relation avec la position le long de ladite canalisation ;
   - enregistrer les caractéristiques détectées du fluide ;
   - évaluer une caractéristique de champ d'écoulement de fluide de l'écoulement de fluide à travers la canalisation et comparer la caractéristique de champ d'écoulement de fluide évaluée avec une caractéristique de champ d'écoulement de fluide de référence pour cette canalisation, afin d'obtenir de cette façon des données concernant une fuite.

2. Procédé selon la revendication 1, dans lequel la caractéristique de champ d'écoulement de fluide de référence est obtenue immédiatement après l'installation de la canalisation.

3. Procédé selon la revendication 2, dans lequel la caractéristique de champ d'écoulement de fluide évaluée est comparée avec des caractéristiques de champ d'écoulement de fluide antérieures provenant de la canalisation pour fournir une indication de changements dans la canalisation au cours du temps.

4. Procédé selon l'une quelconque des revendications précédentes, dans lequel l'étape de comparaison de la caractéristique de champ d'écoulement de fluide évaluée avec la caractéristique d'écoulement de fluide de référence est effectuée par un réseau neuronal.

5. Procédé selon l'une quelconque des revendications précédentes, dans lequel le moyen détecteur est choisi parmi les capteurs de pression, les détecteurs soniques, les détecteurs de vibrations, les détecteurs de vitesse de fluide, les détecteurs de densité de fluide et les détecteurs de distance.

6. Procédé selon l'une quelconque des revendications précédentes, dans lequel les moyens détecteurs sont situés autour d'un axe parallèle à la canalisation et/ou le long de cet axe.

7. Procédé selon l'une quelconque des revendications précédentes, dans lequel la caractéristique d'écoulement de fluide est basée sur la pression de l'écoulement de fluide à travers la canalisation.

8. Système de localisation de fuites pour localiser des fuites dans une canalisation contenant un écoulement de fluide à travers elle, le système comprenant :

   - un moyen détecteur (2), mobile à l'intérieur de la canalisation ;
   - des moyens amenant ledit moyen détecteur ou permettant audit moyen détecteur de traverser au moins une section (1) de la canalisation pour détecter, pendant ladite traversée, des caractéristiques du fluide en relation avec la position le long de ladite canalisation ;
   - des moyens pour enregistrer les caractéristiques détectées du fluide ;
   - des moyens (4) pour évaluer une caractéristique de champ d'écoulement de fluide du fluide s'écoulant à travers la canalisation et comparer la caractéristique de champ d'écoulement de fluide évalué avec une caractéristique de champ d'écoulement de fluide de référence pour cette canalisation afin d'obtenir de cette façon des données concernant une fuite.

9. Système selon la revendication 8, dans lequel le moyen détecteur est choisi parmi les capteurs de pression, les détecteurs soniques, les détecteurs de vibrations, les détecteurs de vitesse de fluide, les détecteurs de densité de fluide et les détecteurs de distance.

10. Système selon l'une des revendications 8 ou 9, dans lequel les moyens détecteurs sont localisés autour d'un axe parallèle à la canalisation et/ou le long de cet axe.

11. Système selon l'une quelconque des revendications 8 à 10, dans lequel les détecteurs sont des détecteurs de pression différentielle pour détecter la pression différentielle au niveau d'emplacements distribués radialement espacés autour d'un axe parallèle à la canalisation et/ou le long de cet axe.

**Patentansprüche**

1. Verfahren zur Ortung von Leckstellung in einer fluidführenden Leitung, welches folgendes aufweist:

   Bewirken oder Gestatten, daß eine Sensoreinrichtugn (2) innerhalb der Leitung beweglich ist, um wenigstens einen Abschnitt (1) der Leitung zu durchlaufen, um während des Durchlaufs charakteristische Eigenschaften des Fluids bezüglich der Position längs der Leitung zu detektieren;
   Aufzeichnen der detektierten Charakteristika des Fluid;
   Ermitteln einer Fluidströmungs-Feldcharakteristik des durch die Leitung strömenden Fluids und vergleichen der ermittelten Fluidströmungs-Feldcharakteristik mit einer Referenzfluidströmungs-Feldcharakteristik für diese Leitung, um Daten betreffend eine Leckstelle zu erhalten.

2. Verfahren nach Anspruch 1, bei dem die Referenzfluidströmungs-Charakteristik unmittelbar nach der Installation der Leitung erhalten wird.

3. Verfahren nach Anspruch 2, bei dem die ermittelte Fluidströmungs-Feldcharakteristik mit früheren Fluidströmungsfeld-Charakteristika von der Leitung verglichen wird, um eine Angabe von Änderungen der Leitung mit der Zeit bereitzustellen.

4. Verfahren nach einem der vorangehenden Ansprüche, bei dem der Schritt zum Vergleichen der ermittelten Fluidströmungs-Feldcharakteristik mit der Referenzfluidströmungs-Feldcharakteristik mittels eines neuralen Netzwerks bewirkt wird.

5. Verfahren nach einem der vorangehenden Ansprüche, bei dem die Sensoreinrichtung aus der Gruppe gewählt ist, die Drucksensoren, Schallsensoren, Vibrationssensoren, Fluidgeschwindigkeitssensoren, Fluiddichtesensoren und Abstandssensoren umfaßt.

6. Verfahren nach einem der vorangehenden Ansprüche, bei dem die Sensoreinrichtung um eine Achse parallel zu der Leitung und/oder länge dieser Achse angeordnet ist.

7. Verfahren nach einem der vorangehenden Ansprüche, bei dem die Fluidströmungs-Feldcharakteristik auf dem Druck des durch die Leitung strömenden Fluids basiert.

8. System zur Ortung von Leckstellen in einer Leitung, durch weiche ein Fluid strörnt, wobei das System folgendes aufweist:

   eine Sensoreinrichtung (2), welche in der Leitung beweglich ist;
   eine Einrichtung zum Bewirken und Ermöglichen, daß der Sensor wenigstens einen Abschnitt (1) der Leitung durchläuft, um während des Durchlaufs Charakteristika des Fluids in Relation zu der Position längs der Leitung zu detektieren;
   eine Einrichtung zum Aufzeichnen der detektierten Charakterisitika des Fluids;
   eine Einrichtung (4) zur Ermittlung einer Fluidströmungs-Feldcharakteristik des durch die Leitung strömenden Fluids und zum Vergleichen der ermittelten Fluidströmungs-Feldcharakteristik mit einer Referenzfluidströmungs-Feldcharakteristik für diese Leitung, um hierdurch Daten betreffend eine Leckstelle zu erhalten.

9. System nach Anspruch 8, bei dem die Sensoreinrichtung aus der Gruppe gewählt ist, welche Drucksensoren, Schallsensoren, Schwingungssensoren, Fluidgeschwindigkeitssensoren, Fluiddichtesensoren und Abstandssensoren umfaßt.

10. System nach Anspruch 8 oder 9, bei dem die Sensoreinrichtung um eine Achse parallel zu der Leitung und/oder länge dieser Achse angeordnet ist.

11. System nach einem der Ansprüche 8 bis 10, bei dem die Sensoren Druckdifferenzsensoren sind, um den Differenzdruck an radial verteilt liegenden Stellen zu detektieren, die um eine Achse parallel zu der Leitung und/oder längs dieser Achse beabstandet angeordnet sind.

## Fig.1

FLOW

2

3

3

4

1

## Fig.2

FLOW

2

3

3

5

6

x = 0

x = L

1

Longitudinal Section of Pipe

7

x = 0

x = L

Distance along the pipe, x

*Fig.3*

**Fig. 4**    *200 mm diameter pipe, flow rate - 20 l/s, gauge pressure - 1 bar*
*leakage - 0.7 l/s, leak size - 10 mm*

Pressure sensor AB

Pressure sensor AD

Differential
Pressure (Pa)

Distance from Leak (m)

EP 1 137 921 B1

**Fig. 5** *200 mm pipe, flow rate - 20 l/s, leakage - 1 l/s, gauge pressure - 2 bar*

Differential Pressure (Pa)

Pressure sensor AB

Distance from Leak (m)

**Fig. 6**    *200 mm pipe, flow rate - 20 l/s, leakage - 1 l/s, gauge pressure - 2 bar*

Differential Pressure (Pa)

Pressure sensor AB

Distance from Leak (m)

EP 1 137 921 B1

**Fig. 7** *200 mm pipe, flow rate - 20 l/s, no leak, gauge pressure - 2 bar*

Differential Pressure (Pa)

Pressure sensor AB

Distance from Leak (m)

EP 1 137 921 B1